# EUROPÄISCHE PATENTSCHRIFT

(11) **EP 2 426 012 B1**
(45) Veröffentlichungstag und Bekanntmachung des Hinweises auf die Patenterteilung: **17.06.2020**
(21) Anmeldenummer: 11007247.7
(22) Anmeldetag: 07.09.2011
(51) Int. Cl.: B60Q 5/00

(54) **Lenkrad für ein Kraftfahrzeug**
Steering wheel for a motor vehicle
Volant pour un véhicule automobile

(30) Priorität: 07.09.2010 DE 102010044595
(43) Veröffentlichungstag der Anmeldung: 07.03.2012
(73) Patentinhaber: Marquardt GmbH, 78604 Rietheim-Weilheim (DE)
(72) Erfinder: Vogel, Stefan, 78086 Brigachtal (DE); Mink, Achim, 78532 Tuttlingen (DE); Rottler, Frank, 78126 Königsfeld (DE)
(74) Vertreter: Otten, Roth, Dobler & Partner mbB Patentanwälte

(56) Entgegenhaltungen:
- EP-A1- 1 661 773
- WO-A1-2004/017521
- WO-A1-2009/090031
- US-A- 3 876 977
- US-A- 5 942 815
- US-A- 5 961 144

## Beschreibung

Die Erfindung betrifft eine Lenkanordnung nach dem Oberbegriff des Patentanspruchs 1.

Solche Lenkanordnungen finden insbesondere Verwendung als Lenkrad für ein Kraftfahrzeug.

Eine derartige Lenkanordnung ist an sich bekannt und umfasst einen Lenkradkörper und eine am Lenkradkörper bewegbar angeordnete Betätigungsfläche. Die Betätigungsfläche wirkt mit einem Schaltelement zusammen, so dass bei manueller Einwirkung auf die Betätigungsfläche das Schaltelement ein Schaltsignal erzeugt. Das Schaltsignal dient wiederum zur Auslösung eines Signals, und zwar um das Signal einer Hupe auszulösen. Als nachteilig hat sich herausgestellt, dass die Betätigungsfläche einen relativ langen Betätigungsweg erfordert, so dass deren Bedienung für den Benutzer wenig komfortabel erscheint.

Aus der US 5 942 815 A ist eine Lenkanordnung bekannt, bei der das Schaltelement für die Hupe aus einem kapazitiven Sensor besteht. Hierzu kann sowohl am Lenkradkörper als auch an der Betätigungsfläche eine elektrisch leitende Fläche angeordnet sein. Die beiden elektrisch leitenden Flächen bilden eine Art von Sensorfläche, und zwar derart dass die beiden elektrisch leitenden Flächen als Elektroden eines Kondensators zusammenwirken. Das Schaltsignal wird anhand der Kapazitätsänderung des Kondensators bei Einwirkung auf die Betätigungsfläche, beispielsweise durch Bewegung der Betätigungsfläche, erzeugt. Diese Lenkanordnung besitzt dadurch eine weitgehend "weglos" beziehungsweise mit einem minimalen Betätigungsweg zu betätigende Betätigungsfläche.

Weitere Lenkanordnungen, die einen kapazitiven Sensor als Schaltelement für die Hupe verwenden, sind in der EP 1 661 773 A1, US 3 876 977 A und WO 2004/017521 A1 gezeigt. Schließlich sind in der WO 2009/090031 A1 eine Lenkanordnung mit einem Drucksensor und in der US 5 961 144 A eine Lenkanordnung mit einem resistiven Sensor als Schaltelement für die Hupe beschrieben.

Der Erfindung liegt die Aufgabe zugrunde, eine komfortabel zu betätigende Betätigungsfläche, insbesondere mit einem geringen Betätigungsweg, zu schaffen.

Diese Aufgabe wird bei einer gattungsgemäßen Lenkanordnung durch die kennzeichnenden Merkmale des Anspruchs 1 gelöst.

Bei der erfindungsgemäßen Lenkanordnung können sowohl am Lenkradkörper als auch an der Betätigungsfläche mehrere zueinander korrespondierende elektrisch leitende Flächen angeordnet sein, die jeweils als ein Kondensator zusammenwirken. Eine etwas kostengünstigere Alternative zur letztgenannten Ausgestaltung besteht darin, dass am Lenkradkörper mehrere elektrisch leitende Flächen und an der Betätigungsfläche eine einzige hierzu korrespondierende elektrisch leitende Fläche angeordnet sind. Die eine elektrische leitende Fläche wirkt wiederum mit den mehreren elektrisch leitenden Flächen als jeweils ein Kondensator zusammen. Eine ebenfalls kostengünstige alternative Ausgestaltung besteht darin, dass an der Betätigungsfläche mehrere elektrisch leitende Flächen und an dem Lenkradkörper eine einzige hierzu korrespondierende elektrisch leitende Fläche angeordnet sind. Die eine elektrische leitende Fläche wirkt wiederum mit den mehreren elektrisch leitenden Flächen als jeweils ein Kondensator zusammen. Dadurch erfährt bei Einwirkung an weitgehend beliebiger Stelle der Betätigungsfläche wenigstens ein Kondensator eine Kapazitätsänderung zur Erzeugung des Schaltsignals. Vorteilhafterweise ist dadurch bei einer großen Betätigungsfläche sichergestellt, dass eine zuverlässige Funktion auch bei Einwirken durch den Benutzer an unterschiedlichen Stellen der Betätigungsfläche gegeben ist. Der Lenkradkörper und die Betätigungsfläche bestehen aus elektrisch isolierendem Kunststoff, wobei die elektrisch leitende Fläche auf dem Kunststoff aufgebracht ist. Die Erfindung realisiert somit einen Hupenkontakt im Lenkrad auf Basis eines kapazitiven Sensorkonzeptes, wobei die Erkennung der Betätigung einer in das Lenkrad integrierten Fläche zur Auslösung der Hupe dient. Weitere Ausgestaltungen der Erfindung sind Gegenstand der Unteransprüche.

In einfacher sowie auch ergonomischer weiterer Ausgestaltung kann die Kapazitätsänderung des Kondensators durch Bewegung wenigstens einer der beiden elektrisch leitenden Flächen bewirkt werden. Zweckmäßigerweise wird dabei die Bewegung der elektrisch leitfähigen Fläche mittels manueller Druckausübung durch den Benutzer auf die Betätigungsfläche bewirkt. Eine solche Ausgestaltung zeichnet sich zum einen durch zuverlässige Funktion und zum anderen auch durch eine besonders kompakte Anordnung aus.

Zwecks einfacher Herstellbarkeit können der aus elektrisch isolierendem Kunststoff bestehende Lenkradkörper und/oder die Betätigungsfläche im Spritzgieß-Verfahren verarbeitet werden. Zweckmäßigerweise ist dann die elektrisch leitende Fläche auf dem Kunststoff aufgebracht, indem die elektrisch leitfähige Fläche als ein Stanzteil aus Metall, als eine metallisierte Oberfläche, beispielsweise in MID(Molded Interconnect Devices)-Technologie, als eine Leitfolie, als ein elektrisch leitfähiger Kunststoff o. dgl. aufgebracht ist.

Um eine einfache elektrische Verschaltung zu schaffen, kann die eine elektrisch leitfähige Fläche elektrisch auf Masse gelegt sein. Bevorzugterweise handelt es sich dabei um diejenige elektrisch leitfähige Fläche an der Betätigungsfläche, die auf Masse gelegt ist. Die andere elektrisch leitfähige Fläche dient dann als Sensorfläche für die Kapazitätsänderung des Kondensators. Bevorzugterweise wird dabei die Kapazitätsänderung an derjenigen elektrisch leitfähigen Fläche, die sich am Lenkradkörper befindet, detektiert.

Für eine besonders bevorzugte Ausgestaltung der Erfindung ist nachfolgendes festzustellen. Ein kapazitiver Sensor erkennt die Bewegung der betätigten Fläche und aktiviert die Hupe. Der Sensor wird so ausgelegt, dass ein Betätigen der Fläche an jeder beliebigen Stelle die Aktivierung erlaubt. Es wird durch den Sensor nicht die Annäherung einer Hand eines Bedieners erkannt sondern die Annäherung einer Sensorfläche an ein an Fahrzeugmasse liegendes Metallteil.

Die mit der Erfindung erzielten Vorteile bestehen insbesondere darin, dass eine Vereinfachung des mechanischen Konzeptes für die Hupe am Kraftfahrzeug erreicht ist. Desweiteren ist eine Kostenreduzierung für den erfindungsgemäßen Hupenkontakt gegenüber den bisherigen Hupenkontakten erreicht.

Als weitere Vorteile sind zu erwähnen, dass ein haptisch gut handhabbarer Hupenkontakt geschaffen ist. Der Hupenkontakt ist funktionssicher bedienbar, da auch bei einseitiger Betätigung eine sichere Auslösung gewährleistet ist. Außerdem ist bei dem erfindungsgemäßen Hupenkontakt aufgrund des allenfalls kurzen Hubes der Komfort für den Benutzer gesteigert.

Ein Ausführungsbeispiel der Erfindung mit verschiedenen Weiterbildungen und Ausgestaltungen ist in den Zeichnungen dargestellt und wird im folgenden näher beschrieben. Es zeigen
Fig. 1 die Draufsicht auf ein Lenkrad für ein Kraftfahrzeug,
Fig. 2 den Lenkradkörper des Lenkrads aus Fig. 1 bei abgenommener Betätigungsfläche in perspektivischer Ansicht,
Fig. 3 den Lenkradkörper aus Fig. 2 in Draufsicht,
Fig. 4 die Unterseite der Betätigungsfläche in Draufsicht und
Fig. 5 eine Prinzipskizze zur Wirkungsweise des Schaltelements am Lenkrad.

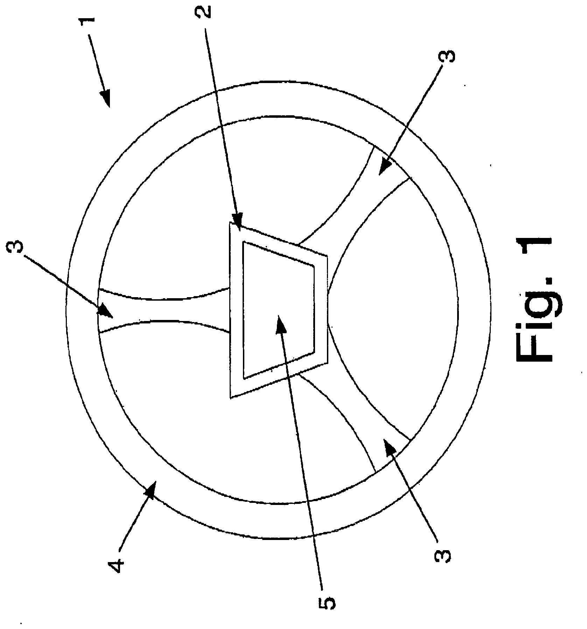

In Fig. 1 ist ein Lenkrad für ein Kraftfahrzeug als Lenkanordnung 1 gezeigt. Das Lenkrad 1 weist einen Lenkradkörper 2 und einen über wenigstens eine Speiche 3 mit dem Lenkradkörper 2 verbundenen Lenkradkranz 4 auf. Am Lenkradkörper 2 ist eine Betätigungsfläche 5 bewegbar angeordnet, deren manuelle Betätigung durch den Benutzer die Hupe des Kraftfahrzeugs einschaltet. Hierfür weist das Lenkrad 1 ein Schaltelement auf, das bei Einwirkung des Benutzers auf die Betätigungsfläche 5 ein Schaltsignal zur Auslösung eines Signals, und zwar für das Signal der Hupe, erzeugt.

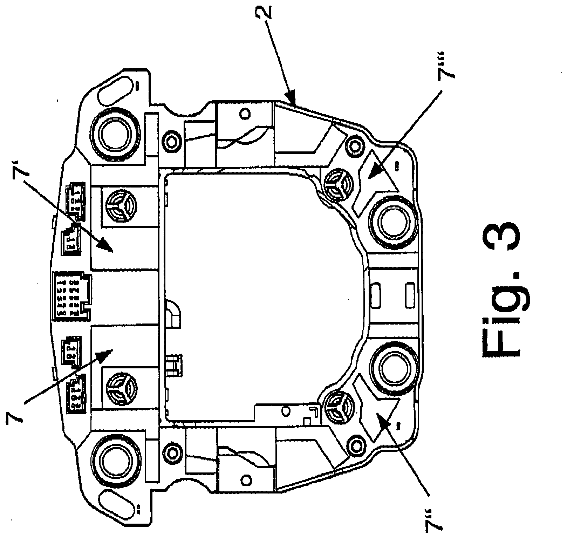

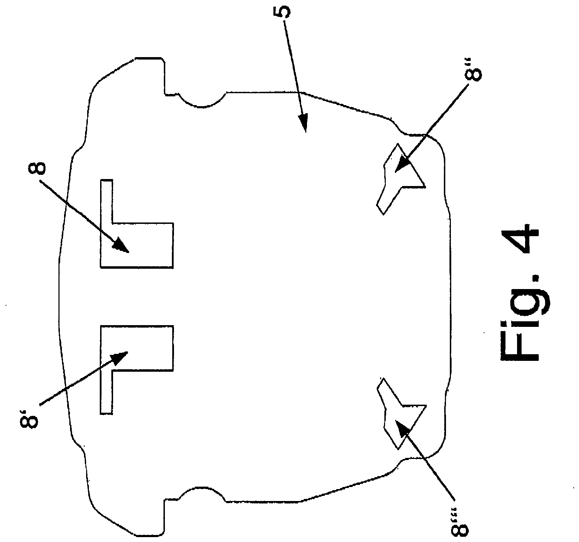

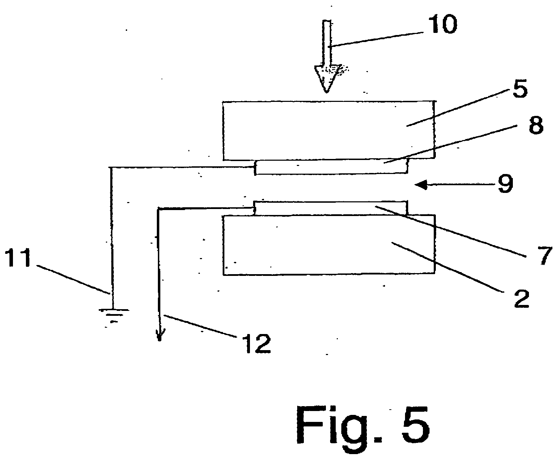

Das Schaltelement zur Auslösung des Signals für die Hupe besteht aus einem kapazitiven Sensor. Wie man anhand von Fig. 3 und Fig. 4 sieht, ist für den kapazitiven Sensor sowohl am Lenkradkörper 2 als auch an der Betätigungsfläche 5 wenigstens eine elektrisch leitende Fläche 7, 8 angeordnet. Und zwar ist die eine Fläche 7 an der Oberseite des Lenkradkörpers 2 und die andere Fläche 8 an der Unterseite der Betätigungsfläche 5 befindlich. Wie man weiter anhand der Prinzipskizze gemäß Fig. 5 erkennt, sind die elektrisch leitfähigen Flächen 7, 8 als eine Art von Sensorfläche zueinander korrespondierend angeordnet, derart dass die beiden elektrisch leitenden Flächen 7, 8 als Elektroden eines Kondensators 9 zusammenwirken.

Das Schaltsignal wird anhand der Kapazitätsänderung des Kondensators 9 bei manueller Einwirkung auf die Betätigungsfläche 5 erzeugt. Hierzu ist die elektrisch leitfähige Fläche 8 an der Betätigungsfläche 5 elektrisch auf Masse 11 gelegt. Die andere elektrische leitfähige Fläche 7 am Lenkradkörper 2 dient als Sensorfläche für die Kapazitätsänderung des Kondensators 9, womit an der Sensorfläche ein entsprechendes Sensorsignal 12 für die Kapazitätsänderung abgreifbar ist. Die Kapazitätsänderung des Kondensators 9 wird wiederum durch Bewegung wenigstens einer der beiden elektrisch leitenden Flächen 7, 8 bewirkt. Und zwar wird die Bewegung der elektrisch leitfähigen Fläche 7, 8 mittels manueller Druckausübung 10 durch den Benutzer auf die Betätigungsfläche 5 bewirkt. Allerdings genügt für die Erzeugung des Sensorsignals 12 bereits eine geringfügige Bewegung einer der beiden elektrischen leitenden Flächen 7, 8, so dass der Kondensator 9 weitgehend "weglos" arbeitet.

Es ist hervorzuheben, dass die Zuleitungen von der Masse 11 zur Fläche 8 sowie für das Abgreifen des Sensorsignals 12 lediglich schematisch in Fig. 5 dargestellt sind. Beispielsweise kann es sich hierbei um Leiterbahnen handeln, die in zweckmäßiger Weise an der Betätigungsfläche 5 sowie dem Lenkradkörper 2 angeordnet sind. Desweiteren kann selbstverständlich auch umgekehrt die elektrisch leitfähige Fläche 7 am Lenkradkörper 2 elektrisch auf Masse gelegt sein und die elektrisch leitfähige Fläche 8 an der Betätigungsfläche 5 als Sensorfläche dienen, was jedoch nicht weiter dargestellt ist.

Zweckmäßigerweise sind gemäß Fig, 3 und Fig. 4 am Lenkradkörper 2 weitere elektrisch leitfähige Flächen 7', 7", 7"' sowie an der Betätigungsfläche 5 weitere elektrisch leitfähige Flächen 8', 8", 8"' angeordnet. Somit sind sowohl am Lenkradkörper 2 als auch an der Betätigungsfläche 5 mehrere zueinander korrespondierende, elektrisch leitende Flächen 7, 7', 7", 7"', 8, 8', 8", 8"', die jeweils paarweise als ein Kondensator 9 zusammenwirken, angeordnet. Dadurch erfährt bei manueller Einwirkung des Benutzers an beliebiger Stelle der Betätigungsfläche 5 wenigstens ein Kondensator 9 eine Kapazitätsänderung zur Erzeugung des Schaltsignals.

Es kann jedoch auch genügen, wenn am Lenkradkörper 2 mehrere elektrisch leitende Flächen 7,7', 7", 7'" und an der Betätigungsfläche 5 lediglich eine einzige große elektrisch leitende Fläche 8, welche zu sämtlichen Flächen 7, 7', 7", 7'" korrespondierend ist, angeordnet sind. Dann wirkt die eine elektrische leitende Fläche 8 mit den mehreren elektrisch leitenden Flächen 7, 7', 7", 7'" als jeweils ein Kondensator 9 zusammen. Umgekehrt ist es auch möglich, an der Betätigungsfläche 5 mehrere elektrisch leitende Flächen 8, 8', 8", 8'" und an dem Lenkradkörper 2 lediglich eine einzige hierzu korrespondierende elektrisch leitende Fläche 7 anzuordnen. Die beiden letztgenannten Ausgestaltungen sind in den Zeichnungen jedoch nicht näher dargestellt.

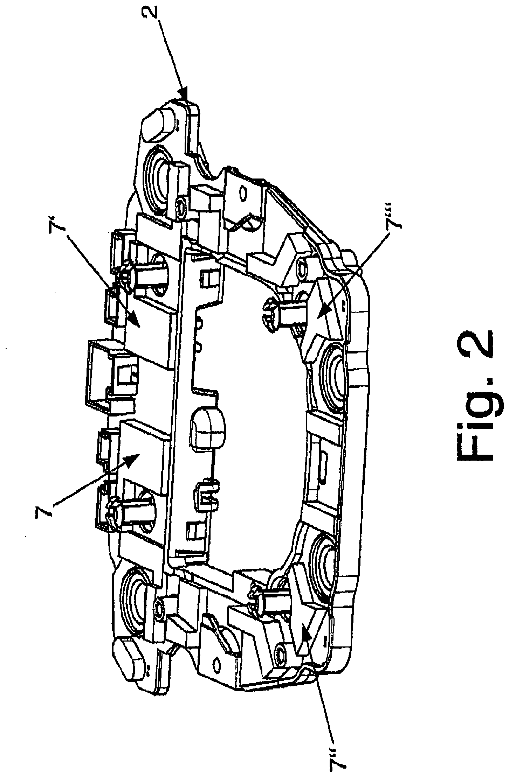

Der Lenkradkörper 2 und/oder die Betätigungsfläche 5 besteht aus elektrisch isolierendem Kunststoff. Die elektrisch leitende Fläche 7, 7', 7", 7'", 8, 8', 8", 8'" ist auf dem Kunststoff aufgebracht Hierzu kann, wie man anhand der Fig. 2 sieht, die elektrisch leitfähige Fläche 7, 7', 7", 7"' als ein Stanzteil aus Metall, beispielsweise aus Kupfer, aufgebracht sein. Selbstverständlich kann anstelle eines Stanzteils die elektrisch leitende Fläche 7, 7', 7", 7", 8, 8', 8", 8"' auch als eine metallisierte Oberfläche, beispielsweise in MID(Molded Interconnect Devices)-Technologie, als eine Leitfolie, als ein elektrisch leitfähiger Kunststoff o. dgl. auf den Lenkradkörper 2 und/oder der Betätigungsfläche 5 aufgebracht sein, was jedoch nicht weiter gezeigt ist. Die elektrisch leitfähige Fläche 8, 8', 8", 8" an der Betätigungsfläche 5 ist, wie bereits erwähnt, elektrisch auf Masse des Kraftfahrzeugs gelegt.

Die Erfindung ist nicht auf das beschriebene und dargestellte Ausführungsbeispiel beschränkt. Sie umfasst vielmehr auch alle fachmännischen Weiterbildungen im Rahmen der durch die Patentansprüche definierten Erfindung. So kann die erfindungsgemäße Lenkanordnung nicht nur in Kraftfahrzeugen sondern auch als Steuerrad für sonstige Fortbewegungsmittel, wie Wasserfahrzeuge oder Flugzeuge, als Steueranordnung für Spielekonsolen o. dgl. Produkten Verwendung finden. Schließlich kann ein solcher kapazitiver Sensor nicht nur als Hupenkontakt sondern auch für sonstige Taster, andere flächige Bedienelemente o. dgl. eingesetzt werden.

### Bezugszeichen-Liste:

- 1:: Lenkanordnung / Lenkrad
- 2:: Lenkradkörper
- 3:: Speiche
- 4:: Lenkradkranz
- 5:: Betätigungsfläche
- 7,8:: (elektrisch leitende) Fläche
- 7',7",7"':: (weitere) Fläche (an Lenkradkörper)
- 8',8",8"':: (weitere) Fläche (an Betätigungsfläche)
- 9:: Kondensator
- 10:: Druckausübung
- 11:: Masse
- 12:: Sensorsignal

## Patentansprüche

1. Lenkanordnung, insbesondere für ein Kraftfahrzeug, mit einem Lenkradkörper (2), mit einer am Lenkradkörper (2) angeordneten Betätigungsfläche (5) und mit einem Schaltelement, wobei bei Einwirkung auf die Betätigungsfläche (5) das Schaltelement ein Schaltsignal zur Auslösung eines Signals, insbesondere das Signal einer Hupe, erzeugt, wobei das Schaltelement aus einem kapazitiven Sensor besteht, wobei sowohl am Lenkradkörper (2) als auch an der Betätigungsfläche (5) eine elektrisch leitende Fläche (7, 8) angeordnet ist, derart dass die beiden elektrisch leitenden Flächen (7, 8) als Elektroden eines Kondensators (9) zusammenwirken, und wobei das Schaltsignal anhand der Kapazitätsänderung des Kondensators (9) bei Einwirkung auf die Betätigungsfläche (5) erzeugt wird, **dadurch gekennzeichnet, dass** sowohl am Lenkradkörper (2) als auch an der Betätigungsfläche (5) mehrere zueinander korrespondierende elektrisch leitende Flächen (7, 7', 7", 7"', 8, 8', 8", 8"') angeordnet sind, die jeweils als ein Kondensator (9) zusammenwirken, oder dass am Lenkradkörper (2) mehrere elektrisch leitende Flächen (7, 7', 7", 7"') und an der Betätigungsfläche (5) eine hierzu korrespondierende elektrisch leitende Fläche (8) angeordnet sind, wobei die eine elektrische leitende Fläche (8) mit den mehreren elektrisch leitenden Flächen (7, 7', 7", 7"') als jeweils ein Kondensator (9) zusammenwirkt, oder dass an der Betätigungsfläche (5) mehrere elektrisch leitende Flächen (8, 8', 8", 8"') und an dem Lenkradkörper (2) eine hierzu korrespondierende elektrisch leitende Fläche (7) angeordnet sind, wobei die eine elektrische leitende Fläche (7) mit den mehreren elektrisch leitenden Flächen (8, 8', 8", 8"') als jeweils ein Kondensator (9) zusammenwirkt, derart dass bei Einwirkung an weitgehend beliebiger Stelle der Betätigungsfläche (5) wenigstens ein Kondensator (9) eine Kapazitätsänderung zur Erzeugung des Schaltsignals erfährt, dass der Lenkradkörper (2) und die Betätigungsfläche (5) aus elektrisch isolierendem Kunststoff bestehen, und dass die elektrisch leitende Fläche (7, 7', 7", 7"', 8, 8', 8", 8"') auf dem Kunststoff aufgebracht ist.

2. Lenkanordnung nach Anspruch 1, **dadurch gekennzeichnet, dass** die Kapazitätsänderung des Kondensators (9) durch Bewegung wenigstens einer der beiden elektrisch leitenden Flächen (7, 7', 7", 7"', 8, 8', 8", 8"') bewirkt wird, wobei insbesondere die Bewegung der elektrisch leitfähigen Fläche (7, 7', 7", 7"', 8, 8', 8", 8"') mittels manueller Druckausübung (10) durch den Benutzer auf die Betätigungsfläche (5) bewirkt wird.

3. Lenkanordnung nach Anspruch 1 oder 2, **dadurch gekennzeichnet, dass** die elektrisch leitende Fläche (7, 7', 7", 7"', 8, 8', 8", 8"') als ein Stanzteil aus Metall, als eine metallisierte Oberfläche in MID(Molded Interconnect Devices)-Technologie, als eine Leitfolie, oder als ein elektrisch leitfähiger Kunststoff auf dem elektrisch isolierenden Kunststoff aufgebracht ist.

4. Lenkanordnung nach Anspruch 1, 2 oder 3, **dadurch gekennzeichnet, dass** die elektrisch leitfähige Fläche (7, 7', 7", 7"', 8, 8', 8", 8"'), insbesondere diejenige Fläche (8, 8', 8", 8"') an der Betätigungsfläche (5) elektrisch auf Masse (11) gelegt ist, und dass vorzugsweise die andere elektrische leitfähige Fläche (7, 7', 7", 7"', 8, 8', 8", 8'"), insbesondere diejenige Fläche (7, 7', 7", 7"') am Lenkradkörper (2), als Sensorfläche für die Kapazitätsänderung des Kondensators (9) dient.

## Claims

1. A steering arrangement, in particular for a motor vehicle, having a steering wheel body (2), having an actuating surface (5) arranged on the steering wheel body (2) and having a switching element, the switching element when acting on the actuating surface (5) generating a switching signal for triggering a signal, in particular the signal of a horn, the switching element consisting of a capacitive sensor, an electrically conductive surface (7, 8) being arranged both on the steering wheel body (2) and on the actuating surface (5), such that the two electrically conductive surfaces (7, 8) interact as electrodes of a capacitor (9), and the switching signal being generated on the basis of the change in capacitance of the capacitor (9) when acting on the actuating surface (5), **characterised in that** a plurality of mutually corresponding electrically conductive surfaces (7, 7', 7", 7"', 8, 8', 8", 8"') is arranged both on the steering wheel body (2) and on the actuating surface (5), which surfaces each cooperate as a capacitor (9), or **in that** a plurality of electrically conductive surfaces (7, 7', 7", 7"') is arranged on the steering wheel body (2) and a corresponding electrically conductive surface (8) is arranged on the actuating surface (5), wherein the one electrically conductive surface (8) interacts with the plurality of electrically conductive surfaces (7, 7', 7", 7"') as a respective capacitor (9), or **in that** a plurality of electrically conductive surfaces (8, 8', 8", 8"') is arranged on the actuating surface (5) and a corresponding electrically conductive surface (7) is arranged on the steering wheel body (2), wherein the one electrically conductive surface (7) cooperates with the plurality of electrically conductive surfaces (8, 8', 8", 8"') as respectively one capacitor (9), in such a way that when acting at largely any desired point on the actuating surface (5), at least one capacitor (9) undergoes a capacitance change to generate the switching signal, **in that** the steering wheel body (2) and the actuating surface (5) consist of electrically insulating plastic, and **in that** the electrically conductive surface (7, 7', 7", 7"', 8, 8', 8", 8"') is applied to the plastic.

2. The steering arrangement according to claim 1, **characterised in that** the change in capacitance of the capacitor (9) is effected by moving at least one of the two electrically conductive surfaces (7, 7', 7", 7"', 8, 8', 8", 8"'), wherein in particular the movement of the electrically conductive surface (7, 7', 7", 7"', 8, 8', 8", 8"') is effected by means of manual pressure (10) exerted by the user on the actuating surface (5).

3. The steering arrangement according to claim 1 or 2, **characterised in that** the electrically conductive surface (7, 7', 7", 7"', 8, 8', 8", 8"') is applied to the electrically insulating plastic as a stamped part made of metal, as a metallised surface in MID (moulded interconnect devices) technology, as a conductive foil, or as an electrically conductive plastic.

4. The steering arrangement according to claim 1, 2 or 3, **characterised in that** the electrically conductive surface (7, 7', 7", 7"', 8, 8', 8", 8"'), in particular the surface (8, 8', 8", 8"') which is on the actuating surface (5) is electrically connected to earth (11), and **in that** preferably the other electrically conductive surface (7, 7', 7", 7"', 8, 8', 8", 8"'), in particular the surface (7, 7', 7", 7"') which is on the steering wheel body (2), serves as a sensor surface for the change in capacitance of the capacitor (9).

## Revendications

1. Dispositif de direction, en particulier pour un véhicule automobile, avec un corps de volant (2), avec une surface d'actionnement (5) disposée sur le corps de volant (2) et avec un élément de commutation, l'élément de commutation générant un signal de commutation pour déclencher un signal, en particulier le signal d'un klaxon, lorsque la surface d'actionnement (5) est actionnée, l'élément de commutation consistant en un capteur capacitif, une surface électriquement conductrice (7, 8) étant disposée à la fois sur le corps de volant (2) et sur la surface d'actionnement (5), de sorte que les deux surfaces électriquement conductrices (7, 8) interagissent en tant qu'électrodes d'un condensateur (9) et le signal de commutation étant généré sur la base du changement de capacité du condensateur (9) lorsque la surface d'actionnement (5) est actionnée, **caractérisé en ce que** tant sur le corps de volant (2) que sur la surface d'actionnement (5) sont disposées plusieurs surfaces électriquement conductrices se correspondant (7, 7', 7", 7'", 8, 8', 8", 8'"), lesdites surfaces interagissant chacune comme un condensateur (9) respectif ou que plusieurs surfaces électriquement conductrices (7, 7', 7", 7"') sont disposées sur le corps de volant (2) et une surface électriquement conductrice correspondant à celles-ci (8) est disposée sur la surface d'actionnement (5), la surface électriquement conductrice (8) interagissant avec la pluralité de surfaces électriquement conductrices (7, 7', 7", 7'") comme un condensateur respectif (9) ou que sur la surface d'actionnement (5) sont disposées plusieurs surfaces électriquement conductrices (8, 8', 8", 8"') et qu'une surface électriquement conductrice (7) correspondant à celles-ci est disposée sur le corps de volant (2), ladite surface électriquement conductrice (7) interagissant avec la pluralité de surfaces électriquement conductrices (8, 8', 8", 8'") comme un condensateur (9) respectif, de sorte qu'au moins un condensateur (9) subisse un changement de capacité pour générer le signal de commutation lorsque la surface d'actionnement (5) est actionnée en un point sensiblement quelconque, que le corps de volant (2) et la surface d'actionnement (5) sont constitués de plastique électriquement isolant et que la surface électriquement conductrice (7, 7', 7", 7'", 8, 8', 8", 8'") est appliquée sur le plastique.

2. Dispositif de direction selon la revendication 1, **caractérisé en ce que** le changement de capacité du condensateur (9) est réalisé par le déplacement d'au moins une des deux surfaces électriquement conductrices (7, 7', 7", 7'", 8, 8', 8", 8'"), le déplacement de la surface électriquement conductrice (7, 7', 7", 7'", 8, 8', 8", 8'") étant réalisé en particulier au moyen d'une pression manuelle (10) exercée par l'utilisateur sur la surface d'actionnement (5).

3. Dispositif de direction selon la revendication 1 ou 2, **caractérisé en ce que** la surface électriquement conductrice (7, 7', 7", 7'", 8, 8', 8", 8'") est appliquée sur le plastique électriquement isolant comme pièce emboutie en métal, comme surface métallisée dans la technologie MID (Molded Interconnect Devices), comme feuille conductrice ou comme plastique électriquement conducteur.

4. Dispositif de direction selon la revendication 1, 2 ou 3, **caractérisé en ce que** la surface électriquement conductrice (7, 7', 7", 7"', 8, 8', 8", 8"'), en particulier la surface (8, 8', 8", 8"') de la surface d'actionnement (5), est reliée électriquement à la masse (11) et que, de préférence, l'autre surface électriquement conductrice (7, 7', 7", 7"', 8, 8', 8", 8"'), en particulier la surface (7, 7', 7", 7"') du corps de volant (2), sert de surface de détection pour le changement de capacité du condensateur (9).
